# EUROPEAN PATENT APPLICATION

(11) **EP 1 447 385 A1**
(43) Date of publication of application: **18.08.2004**
(21) Application number: 03380028.5
(22) Date of filing: 14.02.2003
(51) Int. Cl.: C02F 9/10, C02F 1/04

(54) **A process for treating liquid organic wastes by bidistillation with an intermediate treatment of sulfuric acid**

(71) Applicant: Del Arco Bohorquez, José Antonio, 19004 Guadalajara (ES)
(72) Inventor: Del Arco Bohorquez, José Antonio, 19004 Guadalajara (ES); Rodriguez Alvarino, José Mario, 19004 Guadalajara (ES)
(74) Representative: Manzano Cantos, Gregorio

(57) **Abstract**

The process for treating liquid organic wastes object of this patent consists of the separation of these wastes into a solid phase and a liquid phase which is evaporated to obtain innocuous water by means of bi-distillation with an intermediate sulphuric acid treatment. A separation system by squeezing is described, as well as a system for the evaporation of the water, recovery of the matter in suspension, and removal of the ammonium contained therein. The process forming part of a liquid manure purification and treatment plant is also described, efficiently using a double power source originating from the residual heat produced by the heat from the exhausts of the motor cooling circuits of a cogeneration power plant.

## Description

A process for treating liquid organic wastes by bi-distillation with an intermediate sulphuric acid treatment

### Object of the invention

The present invention consists of a new method for recovering water contained in the organic waste effluents, neutralizing the contaminating feature of said wastes and obtaining an organic by-product, with the efficient use of a heat source, mainly residual, such as that provided by a cogeneration power plant (thermoelectric).

### Background of the invention

The contaminating feature of liquid organic wastes, such as effluents from purifiers, food industry effluents (such as distilleries, bakeries or canneries), liquid manure from livestock farms (such as from cows, pigs, rabbits and the like) or any effluent with high concentrations of organic matter, give way to problems due to alteration of the environment, and particularly of the air, ground and water.

Reusing organic matter and the water contained in said effluents has been the object of a significant variety of processes, among which there are methods based on anaerobic or aerobic fermentation, as well as on the absorption of water by mixing with straw, paper or sawdust and subsequent desiccation, as well as the evaporation of the liquid phase by means of impregnating fabrics and heating, in turn allowing for the distillation and recovery of water.

Said processes have clear drawbacks, such as the production of unpleasant odors (especially during anaerobe fermentation), the long duration of the processes, or the need for large facilities when evaporating and distilling the effluents. The solution to these drawbacks has been partially provided in several patents, such as European patents EP0286616 and EP0396390, or Spanish patent ES2124660, which all share the use of heat for shortening the evaporation process, preventing fermentation of the organic wastes. The evaporation is preceded by a separation of solids by means of suitable sieves or grids (Spanish patent ES2124660), by heating the effluent (European patent EP0286616), or by filtration under pressure (European patent EP0396390).

Said processes still have drawbacks, either because of an excessive use of power, or inefficacy of the heat source used, or because of the size of the facility necessary for the entire process.

### Description of the invention

The proposed invention provides an improvement in the non-solid organic waste treatment processes by incorporating a bi-distillation method with an intermediate sulphuric acid treatment, efficiently using heat sources provided by a cogeneration plant, for the quick evaporation of the liquid phase, and for the recovery of the ammonium contained therein. The sulphuric acid treatment on the condensate obtained after the first concentration - evaporation allows increasing the efficacy thereof and economizing the acid, since it acts only on soluble compounds. Furthermore, the prior condensation process and evaporation process subsequent to the treatment with sulphuric acid is carried out in an energy efficient manner, using the steam generated in the first evaporator as a thermal fluid of the second evaporator.

The proposed process is based on the following processes:
a. Separating into solid and liquid phase by squeezing.
b. Storing the solid phase and optional desiccation thereof.
c. Separating, in a first evaporator, the liquid phase by evaporation and concentration thereof, with recovery of the resulting concentrate, which is incorporated into the solid phase b) and separating the steam, which will be condensed by heat conveyance (acting as thermal fluid) in a second evaporator.
d. Fixation of the soluble components, fundamentally ammonium, after condensation of the steam resulting in c), by neutralization with sulphuric acid and other chemical agents.
e. Separating the ammonium sulphate by concentration in the second evaporator, obtaining a concentrated ammonium sulphate solution and steam.
f. Final condensation of the resulting steam for producing water suitable for reuse and dumping.
g. For heating the first evaporator, there will be an external heat source. For improving the efficiency, a closed thermal fluid circuit (oil, overheated water or steam) can be used, taking the heat from an exchanger with the exhausts of a cogeneration plant. It can also be used to preheat the liquid phase. Heat from the cooling circuits of the motors are likewise usable.

As a result of the process, a solid material is obtained with a moisture content no higher than 75% and suitable for use as an organic fertilizer, either directly or after being transformed by adding mineral components increasing their fertilizing capacity. The water obtained from the process is innocuous and suitable for watering or for reusing it on livestock farms, in the waste treatment plant itself, or for dumping.

### Description of the drawings

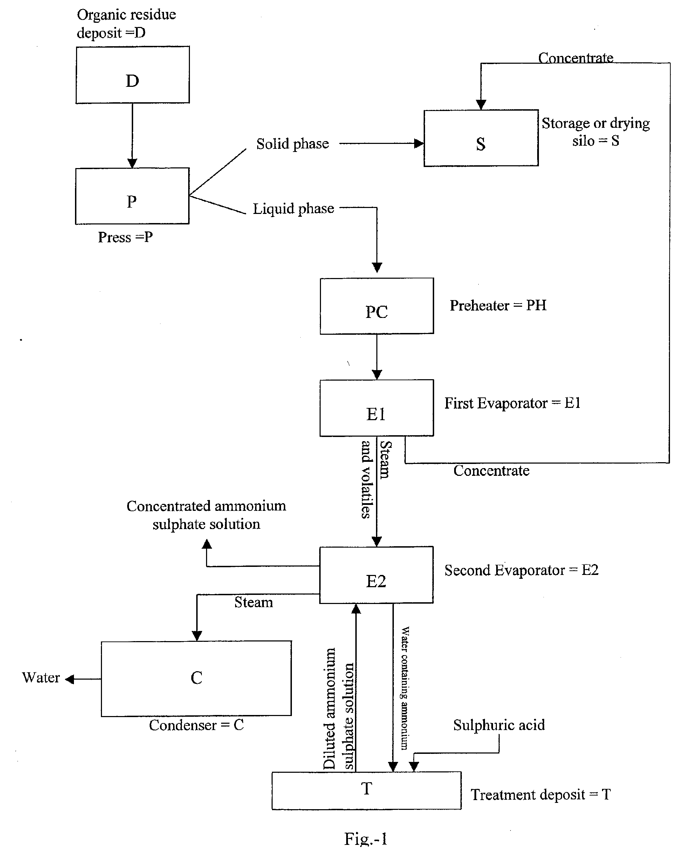

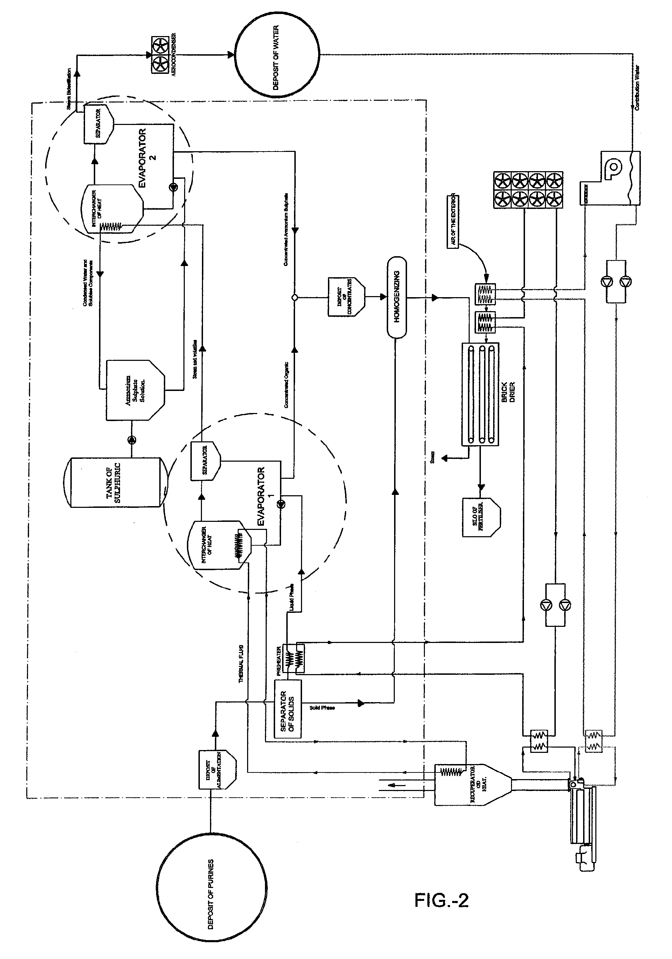

A diagram of the proposed process (figure 1) is enclosed with the present specification. A diagram of the proposed process integrated in the liquid manure treatment plant fed by cogeneration motors (figure 2) is also included.

### Preferred embodiment of the invention

According to figure 1, the process basically implies pumping the liquid organic wastes to a reservoir (R) which feeds a press (P) allowing for the separation of a wet solid phase and a liquid phase with an organic material waste content. The solid phase is stored and optionally dried (D). The liquid phase is transferred to the pre-heater (PH) by pumping and subsequently to the first evaporator (E1). In this evaporator, a concentrate is obtained which is stored or dried together with the solid phase obtained from the press. Steam is also obtained in this first evaporator which is driven to a second evaporator (E2) where it is condensed by cooling by conveying its heat, acting as a thermal fluid. Once condensed, it passes to a treatment deposit where the ammonium content is neutralized by means of addition with sulphuric acid (T). This ammonium sulphate solution passes to the inside of the second evaporator (E2), where it is concentrated by elimination of water in the form of steam which subsequently passes to a condenser where it is condensed, giving useful water. Meanwhile, the concentrated ammonium sulphate solution is extracted from the evaporator (E2). A double heat source is obtained from the cogeneration plant next to the system, originating from the water cooling circuits or from a heat exchanger of the exhaust gases for the previously described heat needs.

## Claims

1. A process for treating liquid organic wastes (mainly liquid manure), **characterized by** the separation of coarse solids from the liquid phase in a press (P), pre-heating of the resulting liquid phase in a pre-heater (PH), the separation of the liquid phase into a steam phase with volatile elements and into another concentrated phase by means of a first evaporator (E1); condensation of the steam by cooling and subsequent neutralization of the soluble compounds with sulphuric acid or the like; the subsequent evaporation in a second evaporator (E2), obtaining a concentrated ammonium sulphate solution and steam.

2. A process according to claim 1, **characterized by** using the same evaporator (E2) for the separation of the ammonium sulphate by concentration and production of steam and for the condensation of the steams produced in the first evaporator.

3. A process according to claims 1 and 2, **characterized by** the recovery of the steam originating from the second evaporator (E2) for condensation in (C) for agricultural, industrial or dumping use.
